# EUROPEAN PATENT APPLICATION

(11) **EP 3 965 044 A1**
(43) Date of publication of application: **09.03.2022**
(21) Application number: 20194129.1
(22) Date of filing: 02.09.2020
(51) Int. Cl.: G06Q 30/02

(54) **METHOD, SYSTEM, PROGRAM, AND MEDIUM FOR TRADING PERSONAL DATA**

(71) Applicant: Laterpay AG, 6300 Steinhausen (CH)
(72) Inventor: Cosmin-Gabriel Ene, 180469 München (DE)
(74) Representative: Würmser, Julian

(57) **Abstract**

Provided a computer-implemented method comprising steps: a) receiving (210), at a payment server (130), one or more purchase requests originating from a user device (110), wherein each of the purchase requests have an associated price; b) storing (220), at a payment server (130), the associated price, a payment account debt value, and user data related to the purchase request in relation with a payment account associated with the user device and/or a user of the user device; c) determine (230), by the payment server (130), a user profile, based on the user data; it is an objective of the present invention to reduce the need for entering payment information manually. The objective is achieved by: d) selecting (240) one or more information consumer servers (140) for settling at least partially the debt value using the user profile; e) receiving (250) one or more offers for settlement from the one or more information consumer server; f) forwarding at least one of the offers for settlement to the user device; g) receiving (260), from the user device, a request for settlement, the request indicating at least one of the offers; h) deducting (270) a compensation value from the payment account debt value, the compensation value being associated with an offer of the indicated at least one of the offers.

## Description

The invention relates to a method, system, program and medium for trading personal data.

Publication WO 2011/029560 A2 from the applicant describes a system for deferred (later) payment of online purchase. The system substantially facilitates online purchase. The user may purchase without entering any payment or contact details until a threshold limit has been reached or time has lapsed. The user is then requested to settle the balance. The application describes a payment system and methods for a plurality of payment processes. The solution is further described on https://www2.laterpay.net, and will further be referenced as LaterPay. The system and methods are invoked for a buyer system making a purchase in an online shop for a certain purchase amount. The system:
- stores an identification number of the buyer system,
- stores the purchase amount in relation to the identification number,
- monitors the total amount of purchases of the buyer system,
- receives a request from the online shop to account for the purchase amount, and
- sends a request for settlement of at least a part of the total amount of purchases to a user of the buyer system only when the total amount of purchases exceeds a predefined value and/or after the expiry of a predefined time interval.

Simplified, the patent application describes a system that allows a buyer to make purchases online with a buyer system for a purchase amount which the buyer firstly does not have to settle. The payment system accumulates the amounts of purchases from the buyer system and only when the total amount of due payments exceeds a predefined value, is the buyer requested to settle the total amount or a part of it. The buyer system can be a PC or a mobile phone or the like. The purchases and purchase amounts are stored by the payment system in relation to a buyer system identification which does not include an identification of the buyer nor does it need a registration or any other user interaction. In absence of a user login or any other user identification, the system depends on a reliable identification of the buyer system, e.g. a mobile phone identification or number such as in combination with the used browser model, number or identification characteristics.

During online purchase, LaterPay may collect personal information and information on user activity for internal usage. From the information collected, LaterPay may derive characteristics, interests, and needs related to users. The information collected has so far only been used for internal administrative use.

The system may collect information about user online activity and allows a payment to be deferred to a later time. However, at some point, the user must enter personal and payment information in order to settle the debt. There is therefore a substantial amount of information that manually has to be entered by the user in order for payment to be finalized. The objective of the present application is to facilitating payment further by reducing the need for manually entering information. This might be done by taking advantage of the personal information collected during a user's online LaterPay usage. A system is also provided allowing a user to trade his/her personal information data.

The objectives of the present invention are achieved by the subject-matter of claims 1, 10, 11, and 12. In particular, the objectives are achieved by a computer-implemented method comprising steps:
a) receiving (210), at a payment server (130), one or more purchase requests originating from a user device (110), wherein each of the purchase requests have an associated price;
b) storing (220), at a payment server (130), the associated price, a payment account debt value, and user data related to the purchase request in relation with a payment account associated with the user device and/or a user of the user device;
c) determine (230), by the payment server (130), a user profile, based on the user data;
d) selecting (240) one or more information consumer servers (140) for settling at least partially the debt value using the user profile;
e) receiving (250) one or more offers for settlement from the one or more information consumer server;
f) forwarding at least one of the offers for settlement to the user device;
g) receiving (260), from the user device, a request for settlement, the request indicating at least one of the offers;
h) deducting (270) a compensation value from the payment account debt value, the compensation value being associated with an offer of the indicated at least one of the offers.

Advantage include less manually entered data for payments to be finalized and a method allowing a user to trade personal data relating to online purchase activities with third parties, in exchange for the third party paying for those same purchase activities.
The purchase request may be e.g. a request for purchase a product, a service or an online accessible digital content, such as downloadable or streaming media, including books, music or video, etc.

The profiling done during calculating the user profile may be based on online user activities, registered by the payment server, such as user purchases. The profiling may also be complemented by a user entering further information about the user, such as age, sex, particular socio-economic factors (e.g. salary, debt, education, civil status, family, etc.), interests and/or specific themes of interest. The calculation may involve weighing user profile characteristics based on number of times purchase of a particular category is made, or based on importance of characteristics. The calculation may also be made based on other products, customers of the purchases made by the user, have also showed interest in or purchased. The calculation may involve statistically establishing the likelihood of the user having certain interests or certain personality traits, such as based on "Big Five" (five-factor model), or other personality measurements. The profiling may be complemented by the user answering questions in order to establishing interests or personality traits. Further information may increase the value of the personal data.

In one embodiment, the payment server is a later pay (LaterPay) server, the payment account may have negative balance, and wherein the forwarding to at least one of the offers in f) is sent after the negative balance of the payment account has reached a limit or after a certain amount of time.

In one embodiment, the payment account is associated with the user device; and the method further comprising:
sending, by the later pay server to the user device, a request for user information, after the negative balance of the payment account has reached the limit or after the certain amount of time, unless the user information is already available at the later pay server for the user device.

In one embodiment, the payment account is a virtual wallet, allowing a user to transfer money to and from a traditional bank account, and allowing purchases other than deferred LaterPay purchases.

In one embodiment, step d) includes matching the user profile with profiles of interest retrieved from a plurality of information consumer servers, in order to select, which of the plurality of information consumer servers, the request should be sent to and/or
wherein step d) includes a bidding procedure between the plurality of information consumer servers in order to select which, of the plurality of information consumer servers, the request should be sent to.

The matchmaking may be based on profiles of interest, advertised by each information consumer server. The profiles may be ranked within each information consumer server. The matchmaking may involve matching the primary characteristics (such as an interest dominating the purchased products) of the user with the highest ranked category of interest of each information consumer server. If there is no information consumer server having the primary characteristics of the user as highest ranking category of interest, the primary characteristics of the user is matched with the next-highest ranking category of interest for each information consumer server, and so on. If there is no information consumer server showing interest in the primary user characteristics, the secondary characteristics of the user will be matched with the highest ranking category of interest, and so on. If there is no match, the user profile may be offered to information consumer servers of general interest. If there are two or more information consumer servers matching the user profile on the same level, a bidding process may be initiated, or the user profile may be offered to a random selected or to each of them.

A bidding may also be initiated with all information consumer servers showing any interest in any characteristics of the user profile, with a further limited amount of information consumer servers, or with all information consumer servers registered.

The calculation may involve anonymizing the personal data of each user device. The anonymized personal data for each user device may be distributed to a plurality of information consumer servers, and each server may bid for the contact information of the user device.

In one embodiment, step d) includes cascading offers based on at least a first and a second user category, wherein the user category is derived from the user data and/or the user profile.

In one embodiment, the user information includes contact data.

In one embodiment, step f) includes displaying, on the user device, options, including at least one or:
selling user data in return for payment account debit;
perform task, such as filling out forms, in return for payment account debit;
watch ads in return for payment account settlement.

The information consumer server may gain access to the user information only after the information consumer server has debited (or has agreed to debit) the user's payment account. In one embodiment, the information consumer server may gain access to a part of the user data directly, and other vital information, such as contact information, after the information consumer server as debited (or has agreed to debit) the user's payment account.

On the other hand, the user's payment account, might not be debited until the user has performed the required tasks, such as filled out the forms, or watched the ads. The user's payment account may also be debited on a running rate, such as a certain small amount for every second of ads watched, or for every form row filled out. There may be a program running on the user device to ensure that an agreed advertisement is running as agreed and is showed on the user device display.

In one embodiment, the options include a selection between a plurality of information consumer servers in order to select which of the plurality of information consumer servers, the request (and the personal data) may be sent to.

In one embodiment, the method further comprises a step:
transmitting to one or more information consumer servers related to the at least one of the offers received in step g), user data determined on the basis of the user profile.

The objectives of the present invention are further achieved by a data processing system comprising:
a user device;
a payment server;
at least one content provider server;
at least one information consumer server;
wherein the system is configured to perform the method as described herein.

The objectives of the present invention are further achieved by a computer program comprising instructions which, when the program is executed by one or more computers, cause the computers to carry out the method of the present invention.

The objectives of the present invention are further achieved by a computer-readable medium comprising instructions which, when executed by one or more computers, cause the one or more computers to carry out the method as described herein.

The advantages of the described system, program and medium, is equal or similar to the advantages of the herein described method.

In the following, embodiments of the invention are described with respect to the figures, wherein:
Fig. 1 shows a system of the present application;
Fig. 2 depicts a method of the present application;
Figs. 3A and 3B depicts examples of database structure of the present appl ication.

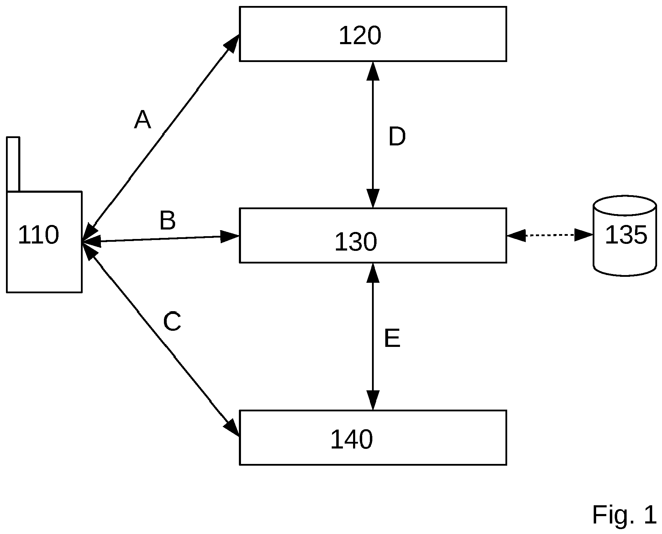

Fig. 1 shows a system comprising a user device 110, a payment server 130, at least one content provider server 120, and an information consumer server 140. The payment server may include a database 135. A user may access the content provider server 120 via the user device 110 (communication A in Fig. 1). During a purchase of content at the content provide server 120, the user may have the option to defer payment, e.g. LaterPay the product. This may be available without the user entering any user or payment information, such as credit card data. The purchase may be completed with a payment account associated with a digital identification of the user device in a payment server 130 being credited a purchase price of the purchase. This may be done without direct communication between the user device 110 and the payment server 130 (i.e. without communication B in Fig. 1) by the content provider server 120 communicating with the payment server to send the identification information of the user device and to settle the payment (communication D). It may also be done by the user device 110 communicating directly with the payment server 130. This may prevent the content provider server from incorrectly charging for content never purchased. The user device 110 may be re-directed to the payment server 130 in order to complete the purchase, or functionality of the payment server 130 may be offered as a plugin, shown embedded in the web page of the content provider 120, allowing direct user device to payment server communication (communication B).

In order to settle the debt, the payment server 130, may generate a user profile as described herein, and initiate a mechanism for selecting an information consumer server 140 for settling the debt. This may be done by the payment server 130 communicating with the user device 110, in order for the user device 110 to select a payment option (communication B). It may also be done via the content provider 120 of last purchase (communication D and A), or by certain payment options being communicated from the content provider 120 and other from the payment server 130 (communication A and B).

An internal matchmaking algorithm may be initiated in the payment server 130 to establish an information consumer server 140 for settling the debt. The establishment of information consumer server 140 may also be done via a communication between the payment server 130 and one or more information consumer servers (communication E) including bidding as described herein.

Information consumer servers 140 may communicate with the payment server 130 (communication E) beforehand to inform the payment server 130 on user profiles of interest for each information consumer server 140.

The user device 110 may communicate with an information consumer server 140 (or a sever instructed by the information consumer server 140), in order to carry out certain tasks in return for having a user payment account debited (communication C).

Once a payment account is debited by an information consumer server 140, the user device may be informed accordingly by the payment server 130 (communication B). The user device may also be informed via the information consumer server 140, or via the content provider server 120.

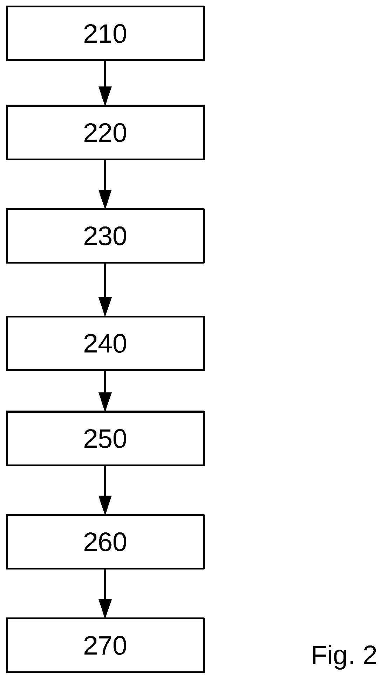

Fig. 2 shows the steps of a method according to the present invention, including:
a) receiving (210), at a payment server (130), one or more purchase requests originating from a user device (110), wherein each of the purchase requests have an associated price;
b) storing (220), at a payment server (130), the associated price, a payment account debt value, and user data related to the purchase request in relation with a payment account associated with the user device and/or a user of the user device;
c) determine (230), by the payment server (130), a user profile, based on the user data;
d) selecting (240) one or more information consumer servers (140) for settling at least partially the debt value using the user profile;
e) receiving (250) one or more offers for settlement from the one or more information consumer server;
f) forwarding at least one of the offers for settlement to the user device;
g) receiving (260), from the user device, a request for settlement, the request indicating at least one of the offers;
h) deducting (270) a compensation value from the payment account debt value, the compensation value being associated with an offer of the indicated at least one of the offers.

Receiving and forwarding information may be done via electronic means of communication, which may include means of transfer of signs, signals, writing, images, sounds, data, or intelligence of any nature transmitted in whole or in part by a wire, radio, electromagnetic, photo-electronic, or photo-optical means.

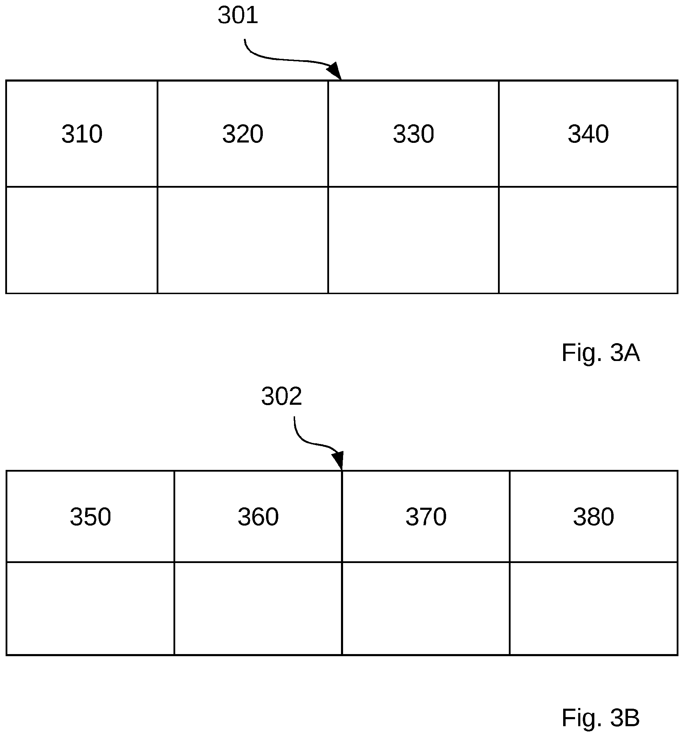

Fig. 3A shows an example of a user information data structure according to the present invention. The user information data structure may be implemented as a table in database 135 of the payment server 130. The structure may be populated with user data from user online activity related to functionality provided by the payment server 130, or other online servers. Data may be organized according to the structure and contain field for a user device ID 310, the user device ID field 310 may be populated with a value corresponding to a hardware identification number of a user device, such as at least part of a MAC address and/or processor identification number and/or a controller identification number and/or an IP address. In particular, the field may be populated without the user of the user device manually entering any data. The ID allows a user of the user device to purchase online with deferred payment, without entering any personal, in particular payment, information.

The user information data structure may also contain a user account net value 320 field, for storing a balance of the account. The value of the account may indicate that the user is in debt (such as by showing a negative value). In particular, the value may indicate debt in case of deferred payment, such as the user using LaterPay services. The value may be increased, i.e. debited, by a third party agreeing to settle the debt in return for the third party being allowed to use user data owned by the user for contacting the user, for targeted commercial purposes or other means. The user may also agree to perform actions, such as watching commercials or filling out forms, in return for the third party debiting the account.

The user information data structure may also contain fields for user information (330, 340) such as user name and contact information. The user information field may not be populated until payment of outstanding purchases needs to be settled, and not even then. The user information data structure is not limited to these examples, and may contain further personal information, such as sex, age, religion, socio-economical data, etc. as described herein.

Fig 3B shows an example of a user activity data structure according to the present invention. The user activity data structure may contain information about activities, such as online purchases etc., performed with the user device in relation to the payment server, or other online servers. The user activity may contain a field 350 associating the user activity data with user information, such as a particular user device, or user device ID. The structure may also contain a timestamp field 360, for storing the date and time of the activity. The structure may also contain a field 370 containing a link to the sale i.e. the purchased goods, service, or online content and a field 380 for storing the categories identified for the purchase. The activity data is used for profiling the user.

### List of references:

- 110: user device
- 130: payment server
- 120: content provider server
- 140: information consumer server
- 135: payment server database
- 210: sending requests to content provider server
- 220: crediting the associated price from a payment account at the payment server
- 230: storing the payment account and user data relating to the requests
- 240: sending a request to settle the payment account for the user device
- 250: calculating user profile
- 260: sending a request to debit the payment account, based on the user profile
- 301: personal information
- 302: user data relating to a purchase request
- 310: user device ID
- 320: net account value
- 330: user name field
- 340: contact information field
- 350: user ID field
- 360: timestamp
- 370: purchased item
- 380: category

## Claims

1. A computer-implemented method comprising steps:
a) receiving (210), at a payment server (130), one or more purchase requests originating from a user device (110), wherein each of the purchase requests have an associated price;
b) storing (220), at a payment server (130), the associated price, a payment account debt value, and user data related to the purchase request in relation with a payment account associated with the user device and/or a user of the user device;
c) determine (230), by the payment server (130), a user profile, based on the user data;
d) selecting (240) one or more information consumer servers (140) for settling at least partially the debt value using the user profile;
e) receiving (250) one or more offers for settlement from the one or more information consumer server;
f) forwarding at least one of the offers for settlement to the user device;
g) receiving (260), from the user device, a request for settlement, the request indicating at least one of the offers;
h) deducting (270) a compensation value from the payment account debt value, the compensation value being associated with an offer of the indicated at least one of the offers.

2. The method of claim 1;
wherein the payment server is a later pay server, the payment account may have negative balance, and wherein the forwarding of at least one of the offers in step f) is sent after the negative balance of the payment account has reached a limit or after a certain amount of time.

3. The method of claim 2;
wherein the payment account is associated with the user device; and
the method further comprising:
sending, by the later pay server to the user device, a request for user information, after the negative balance of the payment account has reached the limit or after the certain amount of time, unless user information is already available at the later pay server for the user device.

4. The method of any of the previous claims,
wherein the payment account is a virtual wallet.

5. The method of any of the previous claims,
wherein step d) includes matching the user profile with profiles of interest retrieved from a plurality of information consumer servers, in order to select, which of the plurality of information consumer servers, the request should be sent to and/or
wherein step d) includes a bidding procedure between the plurality of information consumer servers in order to select which of the plurality of information consumer servers, the request should be sent to.

6. The method of claim 5;
wherein step d) includes cascading offers based on at least a first and a second user category, wherein the user category is derived from the user data and/or the user profile.

7. The method of any of the previous claims,
wherein the user information includes contact data.

8. The method of any of the previous claims,
wherein step f) includes displaying, on the user device, options, including at least one of:
selling user data in return for payment account debit;
performing task, such as filling out forms, in return for payment account debit; and
watching advertisement in return for payment account settlement.

9. The method of claim 8;
wherein the options might include a selection between a plurality of information consumer servers in order to select which of the plurality of information consumer servers, the request should be sent to.

10. The method of any of the previous claims, further comprising a step:
transmitting to one or more information consumer servers related to the at least one of the offers received in step g), user data determined on the basis of the user profile.

11. A data processing system comprising:
a user device (110);
a payment server (130);
at least one content provider server (120); and
at least one information consumer server (140);
wherein the system is configured to perform the method of any of the previous claims.

12. A computer program comprising instructions which, when the program is executed by one or more computers, cause the one or more computers to carry out the method of one of the claims 1 to 10.

13. A computer-readable medium comprising instructions which, when executed by one or more computers, cause the one or more computers to carry out the method of one of the claims 1 to 10.
